# EUROPEAN PATENT APPLICATION

(11) **EP 4 592 166 A1**
(43) Date of publication of application: **30.07.2025**
(21) Application number: 24205452.6
(22) Date of filing: 09.10.2024
(51) Int. Cl.: B62D 35/00

(54) **SPOILER WITH MORPHING SKIN**

(30) Priority: 23.01.2024 KR 20240010055
(71) Applicant: Hyundai Mobis Co., Ltd., Gangnam-gu Seoul 06141 (KR)
(72) Inventor: CHA, Jun Hyuk, Yongin-si, Gyeonggi-do 16891 (KR); CHOI, Hyoung Jin, Yongin-si, Gyeonggi-do 16891 (KR); JOO, Chan Ho, Yongin-si, Gyeonggi-do 16891 (KR)
(74) Representative: Jung, Minkyu

(57) **Abstract**

Disclosed is a spoiler (10) with a morphing skin including: a vehicle body (11); a soft outer skin (30) including a fixed skin portion (31) attached to the vehicle body (11) and a variable skin portion (35) connected to the fixed skin portion (31) and not attached to the vehicle body (11); and one or more actuators (50) configured to press the variable skin portion (35) to be deformed between a first position spaced apart from the vehicle body (11) and a second position in contact with the vehicle body (11).

## Description

### BACKGROUND

### Field

Exemplary embodiments of the present disclosure relate to a spoiler with a morphing skin that is installed on a vehicle and opened and closed as necessary.

### Description of the Related Art

Typically, when a vehicle drives at a high speed along a road, since drag being a resisting force is generated in proportion to the speed and entire area of the vehicle and a lift force is applied to the vehicle by the air flow flowing along a vehicle body, the vehicle is lifted.

In order to solve such a problem, a spoiler installed at the rear end of the vehicle is known. However, the spoiler increases stability and braking force during high-speed driving by compensating for the lift force, but during low-speed driving, since the resistance of the air flowing along the outer side of the vehicle increases, driving performance is reduced.

Accordingly, a variable spoiler that may protrude only during high-speed driving of a vehicle and may be accommodated during low-speed driving thereof is being developed. However, since a currently known variable spoiler is formed of a separate member separately from a plate member forming the exterior of a vehicle, it adversely affects the exterior design of the vehicle, and even though it is accommodated inside a vehicle body during low-speed driving, since the resistance of the air increases due to parts separated from the surrounding vehicle body, driving performance of the vehicle is reduced.

The background art of the present disclosure is disclosed in Korean Patent Application Laid-Open No. 10-2005-0023647 (published on March 10, 2005 and entitled "A Car Spoiler and the Making Method thereof").

### SUMMARY

Various embodiments are directed to a spoiler with a morphing skin that is provided with a skin portion made of a soft material and minimizes a portion separated from a vehicle body of a vehicle.

A spoiler with a morphing skin in accordance with the present disclosure includes: a vehicle body; a soft outer skin including a fixed skin portion attached to the vehicle body and a variable skin portion connected to the fixed skin portion and not attached to the vehicle body; and one or more actuators configured to press the variable skin portion to be deformed between a first position spaced apart from the vehicle body and a second position in contact with the vehicle body.

The vehicle body may include a roof portion that covers an occupant space of a vehicle, and the fixed skin portion may be attached to the roof portion to come into surface contact with the roof portion.

The soft outer skin may include at least one of polypropylene and urethane.

The variable skin portion may be located at a rear end of a vehicle, and when the variable skin portion is located at the first position, the variable skin portion may be inclined to be spaced apart from the vehicle body as being close to the rear end of a vehicle.

The vehicle body may include a variable skin portion seating groove concavely recessed so that the variable skin portion is seated.

The one or more actuators may include: an electric motor; a pinion gear coaxially rotatably coupled to a motor shaft of the electric motor; and a rack gear meshed with the pinion gear and coupled to the variable skin portion.

The vehicle body may have a rack gear through hole through which the rack gear passes.

The one or more actuators may further include a bracket supported on the vehicle body and configured to support the electric motor.

The one or more actuators may further include a rack gear guide configured to slidably support the rack gear and to be supported on the bracket.

The one or more actuators may be provided in plural, and the plurality of actuators may be arranged to be spaced apart from each other to press different portions of the variable skin portion.

A soft outer skin included in a spoiler with a morphing skin of the present disclosure may be connected to a fixed skin portion attached to a vehicle body, and may be deformed between a first position spaced apart from the vehicle body and a second position in contact with the vehicle body. Accordingly, regardless of the first position or the second position, consistency in the exterior design of a vehicle can be maintained and aesthetics may not be deteriorated.

In addition, the planar area of a portion separated between the vehicle body and a variable skin portion, that is, a parting line, is minimized, so that air resistance can be minimized in the first position or the second position and the driving performance of the vehicle can also be improved.

### BRIEF DESCRIPTION OF THE DRAWINGS

FIG. 1 is a perspective view illustrating a spoiler with a morphing skin in accordance with an embodiment of the present disclosure when viewed from above.
FIG. 2 is a perspective view illustrating the spoiler with a morphing skin in accordance with an embodiment of the present disclosure when viewed from below.
FIG. 3 is an exploded perspective view illustrating the spoiler with a morphing skin in accordance with an embodiment of the present disclosure when viewed from above.
FIG. 4 is an exploded perspective view illustrating the spoiler with a morphing skin in accordance with an embodiment of the present disclosure when viewed from below.
FIG. 5 is an enlarged perspective view illustrating an actuator in FIG. 4 when viewed from above.
FIG. 6 is an enlarged perspective view illustrating the actuator in FIG. 4 when viewed from below.
FIG. 7 is an enlarged side view illustrating the actuator in FIG. 4.

### DETAILED DESCRIPTION OF THE ILLUSTRATED EMBODIMENTS

Hereinafter, a spoiler with a morphing skin in accordance with an embodiment of the present disclosure will be described with reference to the accompanying drawings. The terminology used in this specification is a terminology used to appropriately express preferred embodiments of the present disclosure, and may be changed according to the intention of a user or an operator, or practice of the field to which the present disclosure pertains. Therefore, definitions of the terminology should be made based on the content throughout this specification.

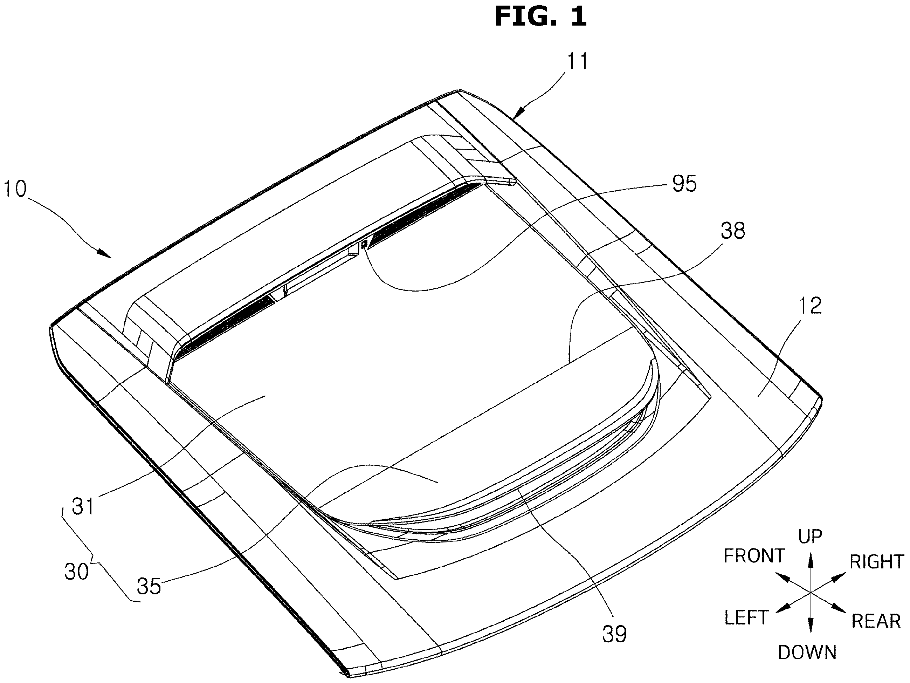

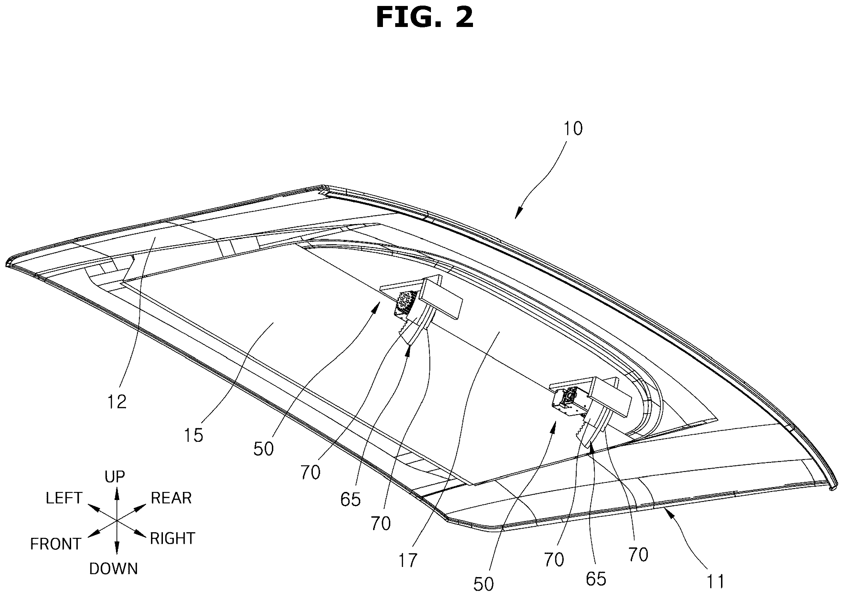

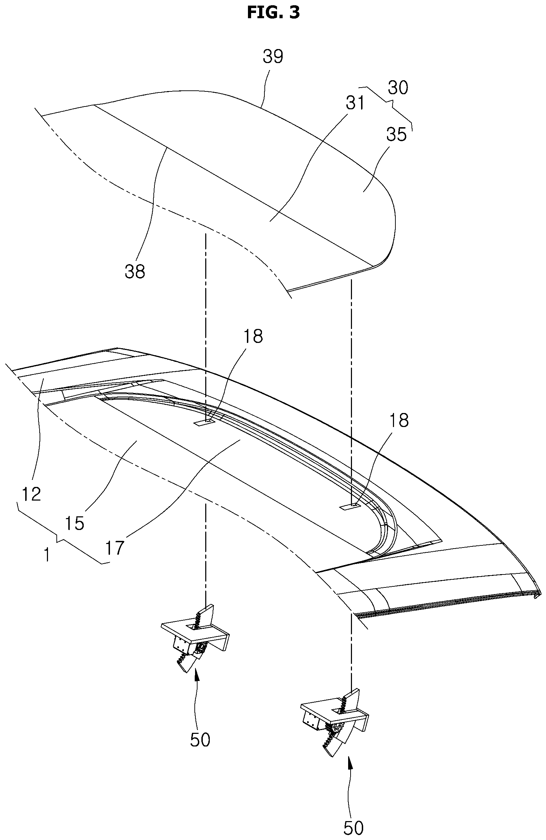

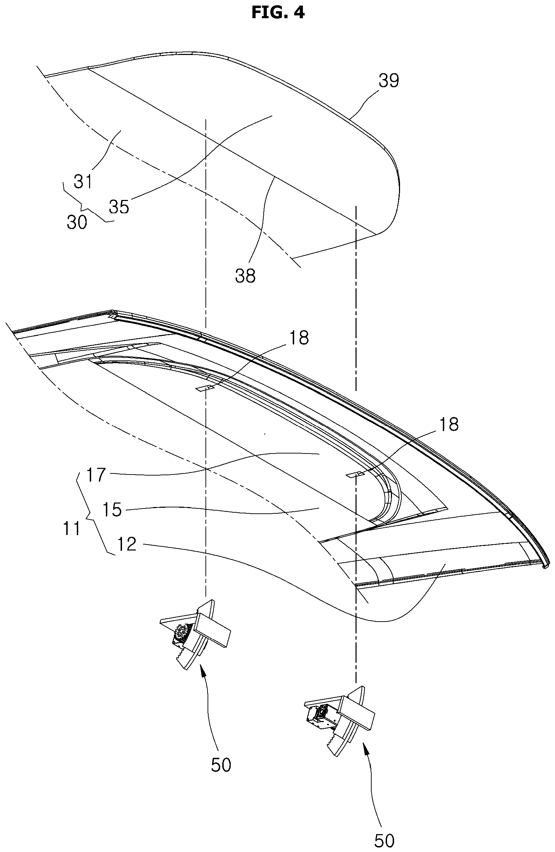

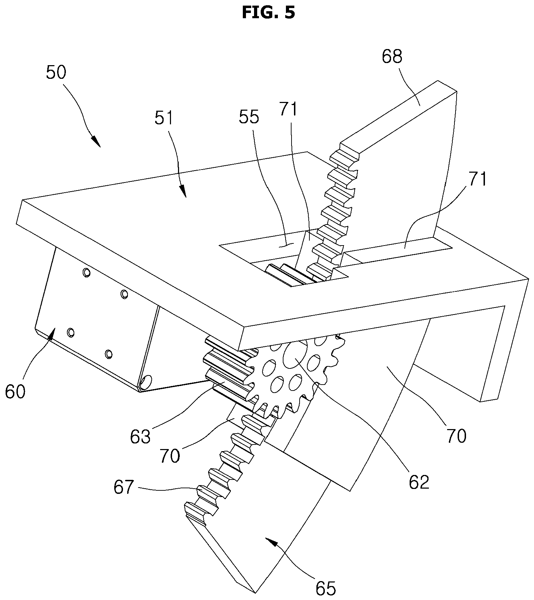

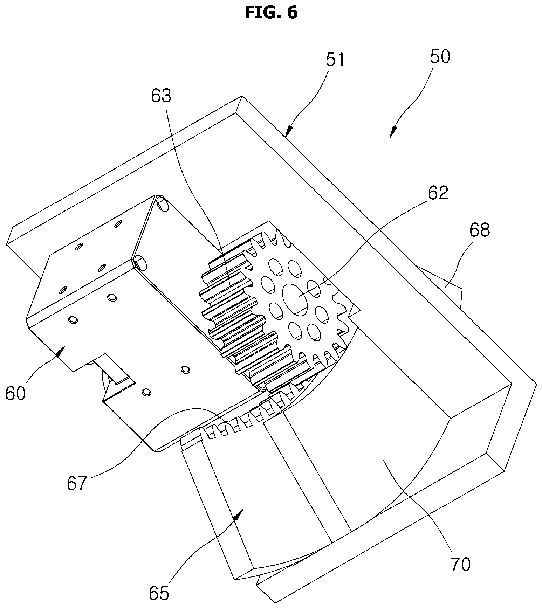

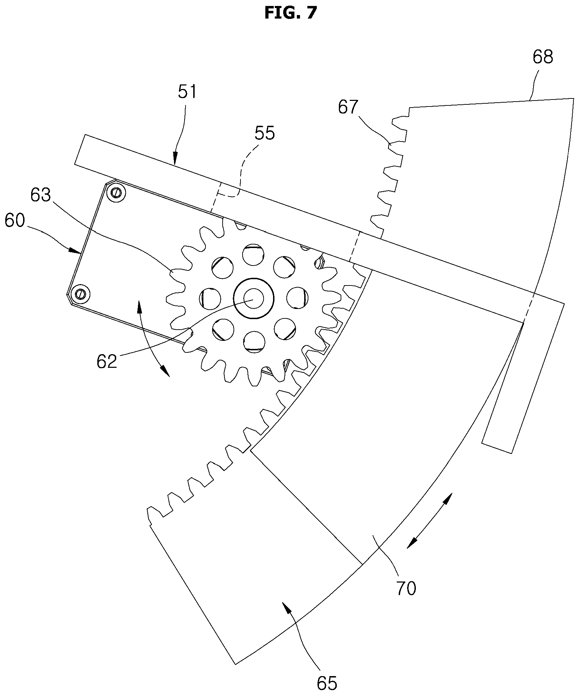

FIG. 1 is a perspective view illustrating a spoiler with a morphing skin in accordance with an embodiment of the present disclosure when viewed from above, FIG. 2 is a perspective view illustrating the spoiler with a morphing skin in accordance with an embodiment of the present disclosure when viewed from below, FIG. 3 is an exploded perspective view illustrating the spoiler with a morphing skin in accordance with an embodiment of the present disclosure when viewed from above, FIG. 4 is an exploded perspective view illustrating the spoiler with a morphing skin in accordance with an embodiment of the present disclosure when viewed from below, FIG. 5 is an enlarged perspective view illustrating an actuator in FIG. 4 when viewed from above, FIG. 6 is an enlarged perspective view illustrating the actuator in FIG. 4 when viewed from below, and FIG. 7 is an enlarged side view illustrating the actuator in FIG. 4.

Referring to FIGS. 1 to 7, a spoiler 10 with a morphing skin in accordance with an embodiment of the present disclosure is used to improve driving stability and braking force by forming air pressure in the direction in which a vehicle is in close contact with a road during high-speed driving, and includes a vehicle body 11, a soft outer skin 30, and an actuator 50.

The vehicle body 11 may include a roof portion that covers an occupant space of the vehicle. For example, the vehicle body 11 illustrated in FIGS. 1 to 4 may be the rear end of the roof portion of a sedan-type passenger vehicle. The vehicle body 11 may include a fixed skin portion support portion 15 located in the center of the vehicle body 11, a variable skin portion seating groove 17 connected to the rear end of the fixed skin portion support portion 15 and concavely recessed, and a roof frame portion 12 surrounding the fixed skin portion support portion 15 and the variable skin portion seating groove 17.

Examples of the material of the vehicle body 11 may include metal, plastic, and fiber-reinforced plastic. The material of the vehicle body 11 may be opaque. Due to the vehicle body 11, it may be difficult for an occupant in the occupant space to see the rear through a rear view mirror inside the vehicle. Therefore, a camera 95 may be installed on the vehicle body 11 to help the occupant see the rear.

The soft outer skin 30 includes a fixed skin portion 31 and a variable skin portion 35. The fixed skin portion 31 is attached to the vehicle body 11. For example, the fixed skin portion 31 may be attached to an upper side surface of the fixed skin portion support portion 15 of the vehicle body 11 by a method such as applying adhesive so as to make surface contact. The planar shape of the fixed skin portion 31 may be the same as the planar shape of the fixed skin portion support portion 15.

The variable skin portion 35 is connected to the fixed skin portion 31 and is not attached to the vehicle body 11. The variable skin portion 35 may be located at the rear end of the vehicle. As can be seen from arrows indicating directions in FIGS. 1 and 2, the soft outer skin 30 may be inclinedly extended so that its height decreases toward the rear of the vehicle.

The variable skin portion 35 may be located behind the fixed skin portion 31. The soft outer skin 30 may include a connection portion 38 at a portion where the fixed skin portion 31 and the variable skin portion 35 are connected.

The variable skin portion 35 may be deformed between a first position spaced apart from the vehicle body 11 and a second position in contact with the vehicle body 11. The shape of the variable skin portion 35 illustrated in FIGS. 1 to 4 represents the shape of the variable skin portion 35 when the variable skin portion 35 is in the first position. When the variable skin portion 35 is in the second position, the variable skin portion 35 may be seated in the variable skin portion seating groove 17 and may come into surface contact with the variable skin portion seating groove 17.

The planar shape of the variable skin portion 35 may correspond to the planar shape of the variable skin portion seating groove 17. When the variable skin portion 35 is located at the first position, the variable skin portion 35 may be inclined to be spaced apart from the vehicle body 11, specifically, the variable skin portion seating groove 17 as being close to the rear end of the vehicle where a rear lamp is installed.

Additionally, when the variable skin portion 35 is located at the first position, a vertical distance between a rear end 39 of the variable skin portion 35 and a rear end of the variable skin portion seating groove 17 may be larger than a vertical distance between the connection portion 38 and a front end of the variable skin portion seating groove 17. The connection portion 38 may be bent to a greater extent when the variable skin portion 35 is in the first position than when the variable skin portion 35 is in the second position.

The soft outer skin 30 may include at least one type of material of polypropylene and urethane. For example, the soft outer skin 30 may be made of polypropylene or urethane material. The soft outer skin 30 may be a plate-shaped member with a constant thickness. The thickness of the soft outer skin 30 may be, for example, 1 mm to 5 mm.

The actuator 50 presses the variable skin portion 35 to be deformed between the first position and the second position. The actuator 50 may be provided in plural. The plurality of actuators 50 may be arranged to be spaced apart from each other to press different portions of the variable skin portion 35. The spoiler 10 with a morphing skin of the embodiment illustrated in FIGS. 1 and 4 includes a pair of actuators 50; however, the present disclosure is not limited thereto and the spoiler 10 with a morphing skin may include one actuator or three or more actuators.

Each actuator 50 includes an electric motor 60, a pinion gear 63, and a rack gear 65. The electric motor 60 includes a motor body and a motor shaft 62 that protrudes to one side from the motor body and rotates by supplied electrical energy. The pinion gear 63 is coaxially rotatably coupled to the motor shaft 62 of the electric motor 60. The pinion gear 63 includes a plurality of gear teeth on an outer peripheral surface thereof.

The rack gear 65 extends in the vertical direction. An upper end 68 of the rack gear 65 is coupled to a lower side surface of the variable skin portion 35. The rack gear 65 is engaged with the pinion gear 63. Additionally, the rack gear 65 includes a plurality of gear teeth 67 engaged with the plurality of gear teeth of the pinion gear 63 on one side in the width direction of the rack gear 65.

The rack gear 65 may extend in the vertical direction along a curved path so that distances from peaks of all gear teeth 67 to the connection portion 38 are the same.

With this configuration, when the motor shaft 62 and the pinion gear 63 coupled thereto rotate counterclockwise based on FIG. 7, the rack gear 65 rises, so that the variable skin portion 35 may be deformed to rise from the first position toward the second position.

However, when the motor shaft 62 and the pinion gear 63 coupled thereto rotate clockwise based on FIG. 7, the rack gear 65 descends, so that the variable skin portion 35 may be deformed to descend from the second position toward the first position.

The vehicle body 11 may be formed with a rack gear through hole 18 through which the rack gear 65 passes. For example, the rack gear through hole 18 may be formed in the variable skin portion seating groove 17. The upper end 68 of the rack gear 65 may be coupled to the variable skin portion 35 by passing through the rack gear through hole 18.

Each actuator 50 may further include a bracket 51 and a rack gear guide 70. The bracket 51 is supported on the vehicle body 11 and supports the electric motor 60. Additionally, the bracket 51 may be fixed to the lower side surface of the variable skin portion seating groove 17, and the motor body of the electric motor 60 may be fixed to the lower side surface of the bracket 51.

The bracket 51 may be formed with a bracket through hole 55. The rack gear 65 may be coupled to the variable skin portion 35 by passing through the bracket through hole 55 and the rack gear through hole 18.

The rack gear guide 70 slidably supports the rack gear 65. The rack gear guide 70 may be provided as a pair. The pair of rack gear guides 70 may be arranged to face both sides in the thickness direction of the rack gear 65. The pair of rack gear guides 70 may extend in the vertical direction along a curved path like the rack gear 65.

The rack gear guide 70 may be supported on the bracket 51. For example, an upper end 71 of the rack gear guide 70 may be fixed and supported on an inner surface of the bracket through hole 55.

The soft outer skin 30 included in the spoiler 10 with a morphing skin may be connected to the fixed skin portion 31 attached to the vehicle body 11, and may be deformed between the first position spaced apart from the vehicle body 11 and the second position in contact with the vehicle body. Accordingly, regardless of the first position or the second position, consistency in the exterior design of the vehicle can be maintained and aesthetics may not be deteriorated.

In addition, the planar area of a portion separated between the vehicle body 11 and the variable skin portion 35, that is, a parting line, is minimized, so that air resistance can be minimized in the first position or the second position and the driving performance of the vehicle can also be improved.

Although the present disclosure has been described with reference to the embodiments illustrated in the drawings, the embodiments of the disclosure are for illustrative purposes only, and those skilled in the art will appreciate that various modifications and other equivalent embodiments are possible from the embodiments. Thus, the true technical scope of the present disclosure should be defined by the following claims.

## Claims

1. A spoiler with a morphing skin comprising:
a vehicle body;
a soft outer skin comprising a fixed skin portion attached to the vehicle body and a variable skin portion connected to the fixed skin portion and not attached to the vehicle body; and
one or more actuators configured to press the variable skin portion to be deformed between a first position spaced apart from the vehicle body and a second position in contact with the vehicle body.

2. The spoiler with the morphing skin according to claim 1, wherein the vehicle body comprises a roof portion that covers an occupant space of a vehicle, and the fixed skin portion is attached to the roof portion to come into surface contact with the roof portion.

3. The spoiler with the morphing skin according to claim 1 or 2, wherein the soft outer skin comprises at least one of polypropylene and urethane.

4. The spoiler with the morphing skin according to any one of claims 1 to 3, wherein the variable skin portion is located at a rear end of a vehicle, and
when the variable skin portion is located at the first position, the variable skin portion is inclined to be spaced apart from the vehicle body as being close to the rear end of a vehicle.

5. The spoiler with the morphing skin according to any one of claims 1 to 4, wherein the vehicle body comprises a variable skin portion seating groove concavely recessed so that the variable skin portion is seated.

6. The spoiler with the morphing skin according to any one of claims 1 to 5, wherein the one or more actuators comprise:
an electric motor;
a pinion gear coaxially rotatably coupled to a motor shaft of the electric motor; and
a rack gear meshed with the pinion gear and coupled to the variable skin portion.

7. The spoiler with the morphing skin according to claim 6, wherein the vehicle body has a rack gear through hole through which the rack gear passes.

8. The spoiler with the morphing skin according to claim 6 or 7, wherein the one or more actuators further comprise:
a bracket supported on the vehicle body and configured to support the electric motor.

9. The spoiler with the morphing skin according to any one of claims 6 to 8, wherein the one or more actuators further comprise:
a rack gear guide configured to slidably support the rack gear and to be supported on the bracket.

10. The spoiler with the morphing skin according to any one of claims 1 to 9, wherein the one or more actuators are provided in plural, and the plurality of actuators are arranged to be spaced apart from each other to press different portions of the variable skin portion.
